# NEUE EUROPÄISCHE PATENTSCHRIFT

(11) **EP 2 180 987 B2**
(45) Veröffentlichungstag und Bekanntmachung des Hinweises auf die Entscheidung über den Einspruch: **28.04.2021**
(45) Hinweis auf die Patenterteilung: 14.08.2013
(21) Anmeldenummer: 08785689.4
(22) Anmeldetag: 22.08.2008
(51) Int. Cl.: B29B 9/16, C08G 63/90, C08G 63/183, B01J 19/00, B01J 19/20, B01J 8/12, B29B 9/06, B29B 13/06

(54) **VERFAHREN ZUR HERSTELLUNG VON HYDROLYSEARMEN POLYESTER-GRANULATEN AUS HOCHVISKOSEN POLYESTER-SCHMELZEN SOWIE VORRICHTUNG ZUR HERSTELLUNG DER POLYESTER-GRANULATE**
METHOD FOR THE PRODUCTION OF POLYESTER GRANULES LOW IN HYDROLYSIS MADE OF HIGH-VISCOSITY POLYESTER MELTS, AND DEVICE FOR THE PRODUCTION OF THE POLYESTER GRANULES
PROCÉDÉ DE PRODUCTION DE GRANULÉS DE POLYESTER FAIBLEMENT HYDROLYSÉS À PARTIR DE POLYESTER FONDU HAUTEMENT VISQUEUX, ET PROCÉDÉ DE PRODUCTION DE GRANULÉS DE POLYESTER

(30) Priorität: 24.08.2007 DE 102007040135
(43) Veröffentlichungstag der Anmeldung: 05.05.2010
(73) Patentinhaber: Uhde Inventa-Fischer GmbH, 13509 Berlin (DE); BKG Bruckmann & Kreyenborg Granuliertechnik GmbH, 48157 Münster (DE)
(72) Erfinder: SCHULZ-VAN ENDERT, Eike, 13467 Berlin (DE); HANIMANN, Kurt, Ch-7415 Rodels/Pratval (CH); BRUCKMANN, Theodor, Anton, 48268 Greven-Gimbte (DE)
(74) Vertreter: Pfenning, Meinig & Partner mbB
(86) Internationale Anmeldenummer: PCT/EP2008/006934
(87) Internationale Veröffentlichungsnummer: WO 2009/027064

(56) Entgegenhaltungen:
- DE-A1- 3 120 792
- DE-A1-102005 010 706
- DE-A1-102006 027 176
- US-A- 2 880 519
- GALA INDUSTRIES: "Centrifugal dryers" 1. Oktober 2004 (2004-10-01), GALA INDUSTRIES , USA , XP007906964 das ganze Dokument
- GALA INDUSTRIES: "Centrifugal dryers" [Online] 1. September 2007 (2007-09-01), GALA INDUSTRIES , USA , XP002512385 Gefunden im Internet: URL:http://www.gala-industries.com/downloa ds/corp_brochures/Dryers.pdf> [gefunden am 2009-01-27] das ganze Dokument

## Beschreibung

Die vorliegende Erfindung betrifft ein Verfahren zur kontinuierlichen Herstellung von hydrolysearmen Polyester-Granulaten aus hochviskosen Polyester-Schmelzen, das sich dadurch auszeichnet, dass der Abfall des Polykondensationsgrades ausgehend von der Polyester-Schmelze zum Polyester-Granulat weniger als 2 % beträgt. Die Erfindung betrifft weiterhin eine Vorrichtung zur Herstellung des Granulates.

Zur Herstellung von Polyester-Granulaten, insbesondere PET (Polyethylenterephthalat), sind eine Reihe von Verfahren entwickelt worden, die das schmelzflüssige Polymer aus einer Düse pressen und die erhaltenen "Strands" dann in einem Wasserbad so abgekühlt werden, dass diese erstarren, dann mittels einer Schneideinrichtung zu zylinderförmigen Chips zerschnitten, danach weiter auf 50 °C bis 60 °C abgekühlt und anschließend nach Entfernen der Transportwassermenge in einem Zentrifugaltrockner oder anderem Trockengerät oberflächentrocken behandelt werden. Diese Chips sind dann für eine Nachbehandlungsvorrichtung zur Erhöhung der Viskosität bereit, die zumeist aus mehreren Stufen, z. B. Kristallisatoren und einem oder mehreren Reaktoren besteht und unter Inertgas bei bis zu 220 °C betrieben wird.

Ein weiteres Verfahren, dass sich mehr und mehr auch für PET durchsetzt, ist das "die-face"-cutting oder auch Heißabschlag genannt. Es unterscheidet sich darin, dass die Düse, aus der das Polymer herausgepresst wird, in direktem Kontakt mit der Schneid- und Wasserkammer steht, wobei ein Kreislauf-Wasserstrom beständig die durch eine einfache an den Düsenlöchern vorbeilaufende Messerkrone erzeugten "Pellets" runder bis ovaler Form wegbefördert, wobei die Schmelzwärme entzogen wird und eine Unterkühlung der "Pellets" stattfindet. Das Chips/Wassergemisch wird getrennt und das Oberflächenwasser wird in einer Rührzentrifuge entfernt, so dass man am Ende transportfähig vorgetrocknetes Granulat erhält.

Dieses Verfahren wurde verbessert im Hinblick auf eine Nutzung der inneren Wärme des Polymers zur Kristallisation des Polyesters, indem die Abkühlung der Schmelze unterhalb des Schmelzpunktes bei Temperaturen von 100 °C bis 190 °C unterbrochen wird. In diesem Bereich setzt die Kristallisation ein und es werden durch Nachschaltung einer horizontalen Kristallisationsrinne Kristallisationsgrade von > 38 % erreicht, die ausreichen, um ein Verkleben der Chips (Agglomeration) bei höheren Weiterverarbeitungstemperaturen, z.B. in einer Trocknung oder Nachkondensationsanlage zu vermeiden. Andererseits können die noch heißen "Pellets" weiter bei konstanter Temperatur zur weiteren Trocknung und Ausgasung von störenden Reaktionsnebenprodukten der Polyester in einem Lagerbehälter über einige Stunden bei leichter Durchströmung mit einem Schleppgas, z.B. Luft oder einem Inertgas, weiter getempert werden. Hierdurch kann ein bereits verkaufsfähiges Resin-Produkt erzeugt werden. Der Einsatz solcher Einrichtungen hat sich für die weitere konventionelle Herstellung von PET bewährt.

Aus der WO 03/042278 A1 ist weiterhin ein entsprechendes Verfahren zur Herstellung von hochmolekularem Polyester bekannt. Diese PET-Produkte haben aufgrund der großen Kettenlänge eine besondere Anfälligkeit für hydrolytischen Abbau unter bestimmten Randbedingungen, wie hoher Temperatur bei gleichzeitiger Anwesenheit von Wasser oder Wasserdampf oder auch langer Lagerzeit bei einwirkender Feuchte. Es hat sich dabei gezeigt, dass bei einem intensiven Kontakt der Schmelze mit heißem Wasser unter Bildung von Wasserdampf mit einer starken Hydrolyse zu rechnen ist, die den Polykondensationsgrad innerhalb weniger Minuten um bis zu 20 % reduziert.

Aus der DE 10 2009 010 706 A1 ist ein Verfahren gemäß dem Oberbegriff des Anspruchs 1 und eine vorrichtung gemäß dem Oberbegriff des Anspruchs 15 bekannt.

Für eine neue Technologie, die a sgehend von hochviskoser Schmelze, ohne Einsatz einer energetisch und intensiv aufwändigen Nachkondensation ein Fertigprodukt direkt liefert, das vergleichbar und qualitativ besser ist als das konventionell erzeugte Polyester-Granulat/Pellets, sind Nachteile sichtbar, die eine industrielle Verwendung erschweren. Insbesondere sind folgende Mängel zu beobachten:
1. schnelle Hydrolyse in Wasserdampfatmosphäre bereits im Vortrockner,
2. mangelhafte Kontrolle der Kristallisation,
3. hohe Wasserverluste durch Verdampfung,
4. Steuerbarkeit der nachfolgenden isothermen Trocknung,

Ausgehend hiervon ist es Aufgabe der vorliegenden Erfindung, ein verbessertes Verfahren anzugeben, bei dem möglichst ein hydrolytischer Abbau des Polykondensationsgrades von direkt hergestellten Polyester-Granulaten vermieden wird. Das Granulat soll weiterhin einen niedrigen Gehalt an Acetaldehyd (AA-Gehalt) aufweisen.

Eine weitere Aufgabe der vorliegenden Erfindung ist es, eine Vorrichtung zur Durchführung eines derartigen Verfahrens.

Die Aufgabe bezüglich des Verfahrens wird durch die kennzeichnenden Merkmale des Patentanspruches 1, in Bezug auf die Vorrichtung durch die Merkmale des Patentanspruchs 11 gelöst. Die Unteransprüche zeigen vorteilhafte Weiterbildungen auf.

Erfindungsgemäß wird nach Patentanspruch 1 vorgeschlagen, das Verfahren dadurch zu optimieren, dass der Heißabschlag bei Wassertemperaturen von 70 °C bis 95 °C und einem Flottenverhältnis von 8 bis 12:1 durchgeführt wird. Wesentlich dabei ist, dass die Flotte bis zum Eintritt in den Vortrockner erhalten bleibt und das Kreislaufwasser im Vortrockner innerhalb von < 10 sec abgeschieden wird. Es hat sich nun gezeigt, dass unter Einhaltung dieser Verfahrensbedingungen ein Polyester-Granulat bzw. Pellets gewonnen werden können, dessen Polykondensationsgrad weniger als 2 % unterhalb des Polykondensationsgrades der hochviskosen Schmelze liegt. Da nun mit dem erfindungsgemäßen Verfahren Polyester-Granulate bzw. Pellets mit einem wie vorstehend genannten hohen Polykondensationsgrad gewonnen werden können, ist es möglich, diese direkt für eine Flaschen- und Folienanwendung weiter zu verwenden, ohne zwischengeschaltete Einrichtungen zur Viskositätserhöhung, womit Abkühlen der Granulate/Pellets, Zwischenlagerung, Wiedererwärmen und langfristiges Tempern bei hoher Temperatur sowie aufwändige Inertgaskreisläufe und erneutes Abkühlen verbunden sind.

Beim erfindungsgemäßen Verfahren wird von einer mit einer kontinuierlichen Polykondensationsanlage erzeugten Polyester-Schmelze, bevorzugt einer PET-Schmelze, mit einem Polykondensationsgrad von 132 bis 165, bevorzugt bis zu 162 ausgegangen. Derartige Verfahren zur Herstellung von hochviskosem Polyester sind an und für sich im Stand der Technik bekannt. Siehe hierzu die bereits erwähnte WO 03/042278 A1.

Überraschenderweise hat es sich nun gezeigt, dass mit dem erfindungsgemäßen Verfahren lediglich ein Abbau des Polykondensationsgrades auf Werte von weniger als 2 %, bevorzugt auf Werte von kleiner als 1,5 %, bezogen auf den Polykondensationsgrad der hochviskosen Schmelze erfolgt. Beim erfindungsgemäßen Verfahren ist besonders darauf hinzuweisen, dass eine übliche Wasservorabscheidung, zur Entlastung des Vortrockners, des Transportwassers aus der Zufuhrleitung von der Schneideinrichtung zum Vortrockner nicht die zu erwartende Verringerung der Hydrolyse ergab, d.h. der sich bildende Wasserdampf wirkte erheblich stärker auf die heiße Oberfläche der Pellets/Granulate ein, als eine kühlende Wasserschicht. Es ist dabei wichtig, um den Effekt zu erreichen, dass das Flottenverhältnis, also das Verhältnis Wasser zu Pellets/Granulat, auf ein Flottenverhältnis von 8 bis 12:1 eingestellt wird und dass die Wassertemperatur beim Heißabschlag im Bereich von 80 °C bis 90 °C liegt. Hieraus ergaben sich nur geringe Hydrolyseeffekt-Unterschiede, die im Streubereich der Analytik anzusiedeln sind. Beim erfindungsgemäßen Verfahren kommt soweit der Vortrocknung entscheidende Bedeutung zu. Es hat sich gezeigt, dass bei Einhaltung der Bedingungen des Anspruchs 1 ein Polyester-Zwischengranulat nach der Vortrocknung erhalten wird, das eine Restfeuchte von < 200 ppm und > 100 ppm aufweist.

Bevorzugt wird beim erfindüngsgemäßen Verfahren PET (Polyethylenterephthalat) hergestellt.

Als entscheidende Kriterien für eine minimalisierte Hydrolyse stellen sich folgende technischen Merkmale heraus:
1. keine Vorentwässerung vor dem Trockner,
2. schnelle Abfuhr des Transportwassers im Trockner innerhalb von < 10 sec.,
3. schnelle Entfernung des Oberflächenwassers innerhalb von 30 s bis 2 Minuten.
4. geringe Verdampfung von in die Polymerstruktur eindiffundiertem Restwasser bei fortschreitender Trocknung und dessen effiziente Abfuhr mittels trockener vorgewärmter Luft im Gegenstrom aus dem nachgeschalteten Auffangsilo,
5. Kondensation des Wasserdampf/Luftgemisches in einem nachgeschalteten Sprühkondensator, dessen Wasser dem Transportwasserkreislauf entnommen, gekühlt und nach Filtrierung in den Hauptkreislauf zurückgeführt wird.
6. Kontrolle der Spülluft hinsichtlich Menge und Taupunkt der zwischen -10 °C und -40 °C liegen sollte, in der Haupttrocknung zur weiteren Entfernung von Wasser und sonstigen flüchtigen Beiprodukten des Polyesters.

Beschrieben wird auch das nach dem vorstehend beschriebenen Ver-fahren hergestellte Granulat, bevorzugt aus PET. Das Granulat, das mit dem vorstehend beschriebenen Verfahren hergestellt wird, zeichnet sich insbesondere dadurch aus, dass sein Polykondensationsgrad weniger als 2 %, bevorzugt weniger als 1,5 %, bezogen auf den Polykondensationsgrad des hochviskosen Polyester-Harzes beträgt. Ein weiteres wesentliches Merkmal, das das Granulat kennzeichnet, ist der Kristallisationsgrad von kleiner 38 % (Dichtmessmethode). Weitere Merkmale sind ein Leichtsiederanteil (z.B. AA, MDO etc.) kleiner 1 ppm, bevorzugt 0,5 bis 0,9 ppm, sowie eine ausgezeichnete Farbe, die je nach Spezifikation einen Gelbwert b* (CIELAB) von -1 bis -3 aufweist. Das Granulat zeichnet sich weiterhin dadurch aus, dass sein Wasseranteil kleiner 100 ppm ist und dass das Granulatkorngewicht kleiner 25 g, bevorzugt < 15 g beträgt. Es ist weiterhin überraschend, dass das hergestellte Granulat einen sehr niedrigen Gehalt an Acetaldehyd (AA-Gehalt) von < 0,8 ppm aufweist. Ein weiterer Vorteil des Granulates ist, dass dessen spezifische Oberfläche > 1,4 m²/kg, bevorzugt 1,6 bis 1,8 m²/kg ist. Das Granulat ist damit für alle Anwendungen der Verpackungsindustrie ausgezeichnet geeignet und bietet durch seine niedrige Kristallinität zusätzliche Vorteile bei der Flaschenherstellung, die insbesondere eine niedrige Wiederaufheiztemperatur ermöglicht und dadurch die erneute Bildung von niedrig siedenden Abbauprodukten des Polyesters reduziert und die Geschwindigkeit der Herstellung von Preforms erhöht. Es werden auch keine "High-Melts" in den Preforms festgestellt, die bei herkömmlichen Verfahren während einer Festphasenkondensation entstehen können, da in dem neuen Verfahren keine oder nur marginale Erhöhung der Viskosität wegen der beschriebenen Niedrigtemperaturbehandlung erfolgt.

Die Erfindung betrifft dann weiterhin eine Vorrichtung zur Herstellung von Polyester-Granulat, bevorzugt PET-Granulat, aus einer hochviskosen Polyester-Schmelze mit einem Polykondensationsgrad von 132 bis 165. Die Vorrichtung zeichnet sich insbesondere dadurch aus, dass der Vortrockner als Rührzentrifuge ausgebildet ist. Der Ausbildung der Rührzentrifuge in Form eines Konus, wobei die Zentrifugenzarge von der Basis aus nach oben konisch oder gestuft aufgeweitet ist, kommt entscheidende Bedeutung zu. Neben der Ausbildung des Vortrockners als Rührzentrifuge ist bei der Vorrichtung weiterhin wesentlich, dass im weiteren Prozessverlauf eine spezifisch ausgebildete Trocknungs-/Entgasungsvorrichtung verwendet wird. Die Trocknungs-/Entgasungsvorrichtung der Erfindung zeichnet sich besonders dadurch aus, dass sie in Form eines vertikalen zylindrischen Behälters ausgebildet ist und dass der Behälter in eine Zone gleicher Temperatur und eine Abkühlzone aufgeteilt ist.

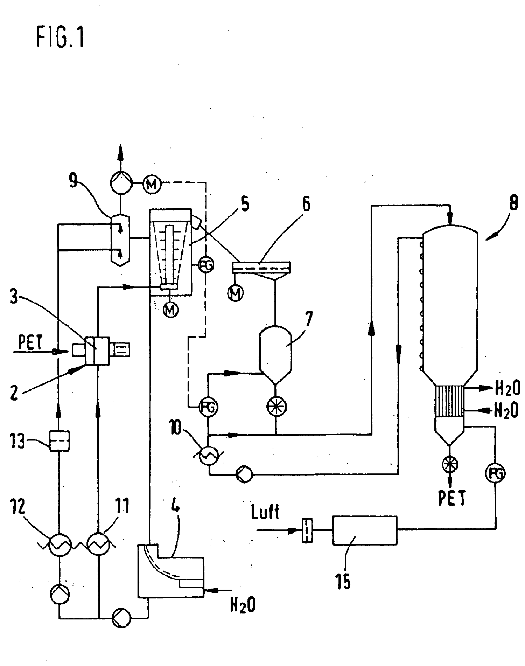

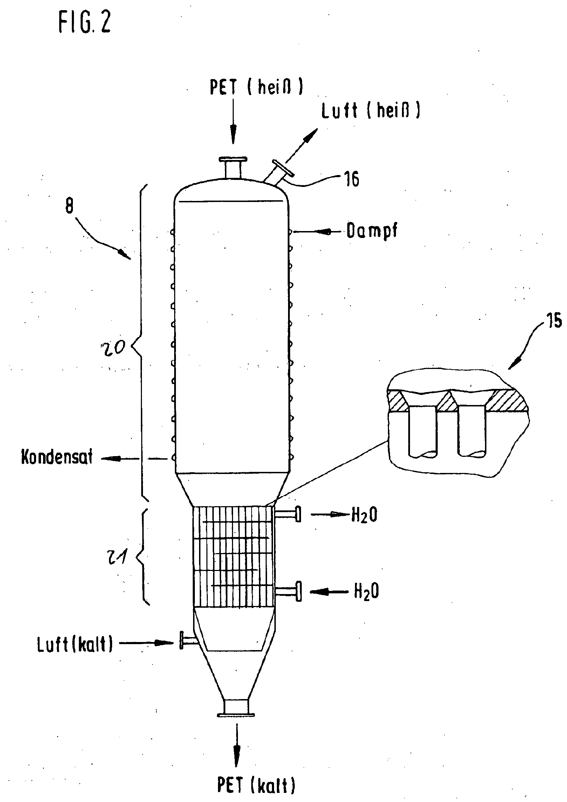

Die Erfindung wird nachfolgend durch die Figuren 1 und 2 näher beschrieben.
Figur 1 zeigt dabei ein Fließschema des Gesamtprozesses und
Figur 2 zeigt die Trocknungs-/Entgasungsvorrichtung.

Der Gesamtprozess ist in Figur 1 dargestellt. Der Ablauf betrifft die Herstellung von PET.

Die hochviskose Schmelze wird mittels einer Dosierpumpe 2, die einen Druck von > 80 bar bis 200 bar aufbauen kann, durch eine beheizte Düsenplatte 3 gepresst (Unterwassergranulierung unter mindestens 1 bar Überdruck mit einer Wassereintrittstemperatur von mindestens 70 °C, bevorzugt 80-95 °C). Ein eng an dieser laufender Schneidmesserkranz schält die Schmelze von jedem Loch der Düsenplatte ab, wodurch sich runde oder ovale Körner (Pellets) ausbilden, die durch eine intensive Wasserumspülung an der Oberfläche amorph erstarren. Die Wasserkammer steht unter leichtem Überdruck und das Flottenverhältnis beträgt zwischen 8 und 12:1. Das Pellet/Wassergemisch gelangt über eine kurze Rohrleitung tangential in den Vortrockner 5, der als Rührzentrifuge ausgebildet ist, wobei die Wasserabscheidung im unteren Bereich stattfindet und die Pellets im oberen Bereich austreten.

Hier hat sich gezeigt, dass im Unterschied zum herkömmlichen Verfahren es darauf ankommt, das Flottenverhältnis innerhalb weniger Sekunden Verweildauer im Vortrockner 5, d.h. im unteren Fünftel desselben das Wasser so vollständig wie möglich zu entfernen, gegen "Null" zu fahren, um einerseits den weiteren Wärmeentzug aus den Pellets durch das Wasser und andererseits den Oberflächenwasserfilm auf den Pellets so zu minimalisieren, dass durch das verdampfende Wasser weder Hydrolyse noch Unterkühlung der Pellets aus dem Arbeitsbereich von 120 °C bis 180 °C auftritt. Gleichzeitig wurde gefunden, dass das Verhältnis von Pellets zu verdampftem Wasser in kg/kg nur in engen Grenzen von 100:1 bis 20:1 liegen darf, um die beschriebenen nachteiligen Ergebnisse zu vermeiden.

Der neuen Trocknerkonfiguration wurden diese Prämissen zugrunde gelegt. Insbesondere der Eingabebereich der Flotte ist so gestaltet, dass die Rühr-/Förderwendel, die in Form einer offenen Schnecke ausgeführt sind, zusätzliche Leitelemente in Form eines Blatt- oder Turbinenrührers erhalten.

Hierdurch wird die fluide Masse der Flotte an die Peripherie des Rührers bewegt und kann so mühelos und extrem schnell durch die dort zylindrische, gelochte Zentrifugenzarge abgeführt werden, wobei Lochgröße und Anzahl zu beachten sind. Des Weiteren wird zur Abscheidung des Oberflächenwassers eine Reduktion der Schichtdicke vorgenommen, indem die bis dato zylindrische Zentrifugenzarge nach oben konisch oder gestuft zylindrisch ausgeführt wird, wodurch sich die Fliehkräfte kontinuierlich erhöhen und dementsprechend die Schichtdicke des Wassers auf den Pellets abnimmt. Der Zentrifugal/Förderrührer wird der Durchmesserzunahme stetig angepasst, so dass die Schichtdicke (Kuchen) mit größer werdendem Durchmesser abnimmt. Hierbei spielt auch der Abstand der Rühr/Förderblätter zur Siebzarge eine erhebliche Rolle zur maximalen Wasserabscheidung. Sowohl Wasser als auch sich bildender Dampf können so leicht nach außen durch den Siebkonus abgeführt werden. Ein weiterer Vorteil des Konus ist die vermehrt zur Verfügung stehende Siebfläche, die den Durchtritt von Wasser und Dampf erleichtert. Es hat sich in Versuchen gezeigt, dass ein Verhältnis Eingabedurchmesser (unten):Auswurfdurchmesser (oben) von 0,75 bis 0,6 den besten Effekt der Wasserabscheidung erzeugt bei gleichzeitiger Minimalisierung der Dampfbildung.

Erstaunlicherweise wurde auch gefunden, dass die erste Kristallisation auf < 10 % bereits im Vortrockner 5 bei Temperaturen oberhalb der Glasumwandlungspunktes (70-80 °C) stattfindet. Wiederholte Tests ergaben, dass dann keine sonst für PET übliche Agglomeration mehr feststellbar war. Die Notwendigkeit einer weiteren Kristallisation, z.B. auf einer Schwingrinne, ist dadurch nicht mehr erforderlich. Ein einfaches, isoliertes Klassiersieb 6 zur Abscheidung von Überlängen genügt, um den weiteren Ablauf der Diffusion und Trocknung von Leichtsiedern des PET zu bewerkstelligen.

Als weiteres wesentliches Element ist ein Einspritzkondensator 9 zu nennen, welcher den Wasserhaushalt des Gießwasserkreislaufes optimiert, so dass es zu weniger Abschlammverlusten und Wasserverlusten des durch Rückwärts-Osmose kostspielig aufbereiteten Wassers kommt.

Der Einspritzkondensator 9 wird direkt dem Vortrockner 5 nachgeschaltet, um den unvermeidlich entstehenden Wasserdampf im Trockner auf weniger als 1/10 zu reduzieren. Aus der Massen/Energiebilanz ergab sich, dass z.B. bei einem Pelletdurchsatz von 12.000 kg/h eine Dampfmenge von 600 kg/h erzeugt wurde. Von dieser konnten nun 530 kg/h zurückgewonnen werden. Da der Einspritzkondensator im Seitenstrom des Haupt-Gießwasserkreislaufes angeordnet ist, konnte damit gleichzeitig die Temperaturregelung des letzteren, dem eine hohe Bedeutung beim "die-face-cutting" zukommt, gelöst werden.

Um zuverlässig erhöhte Hydrolyse zu vermeiden, hat es sich erstaunlicherweise gezeigt, dass das Spülen mit trockener auf 140 °C bis 180 °C vorgewärmter Luft (Heizer 10) durch das nachfolgende Sammelgefäß 7 und durch Leiten dieses Luftstromes in Gegenrichtung zum Pelletfluss durch das Klassiersieb 6 und den Vortrockner 5, dessen Feuchte auf ca. + 10 °C Taupunkt eingestellt wird, notwendig für ein gleichmäßig kristallisierendes und vorgetrocknetes Produkt ist, das den Anforderungen an die Qualität entspricht. Hierzu wird die in das Sammelgefäß 7 einströmende Luftmenge in Abhängigkeit vom Taupunkt am Eintritt der Luft in den Trockner 5 so geregelt, dass eine Restfeuchte der Pellets von < 200 ppm, vorzugsweise > 100 ppm, am Austritt erreicht wird. Der Transfer der heißen Chips in ein Verweilsilo 8 erfolgt dann mittels der gleichen vorgewärmten, trockenen Luft, wobei eine "high-density"-Förderung bevorzugt ist, die das Kugelgranulat schonend ins Silo befördert.

Erstaunlicherweise hat sich gezeigt, dass ein weiteres Heruntertrocknen zu diesem Zeitpunkt der weiteren Entgasung der Pellets von Leichtsiedern entgegensteht. Es wurde gefunden, dass die geringen in der Polyester-Struktur vorhandenen Wassermengen einen Schleppeffekt für die um eine Potenz geringeren Leichtsieder Acetaldehyd, Methyldioxolan und andere Abbauprodukte des PE haben und somit der beschleunigte Austrieb dieser Stoffe mit Hilfe des Restwasseranteils gesteuert werden kann. Es wurde eine zeitliche Reduktion der Ausgasungsprozedur um etwa 30 % bis 40 % gegenüber den herkömmlichen Verfahren gefunden.

Das Entgasungsteil des Silos 8 wird mit kalter Luft durchströmt, wobei diese einen geregelten Taupunkt zwischen -10 °C und -40 °C aufweist. Die Luftmenge wird dabei über einen Regler 15 so eingestellt, dass die aus den Pellets diffundierenden, unter den genannten Temperaturbedingungen gasförmigen, Beiprodukte abgeführt werden. Das Verhältnis Pelletmenge zu Luftmenge wird in optimaler Weise auf 5 bis 25 angesetzt. Die Zuführung der Luft erfolgt etwa bei Raumtemperatur, aber unterhalb der zulässigen Pelletablauftemperatur von 50 °C, wobei die Verteilung der Luft unterhalb einem in das Silo integrierten Chips/Wasser-Rohrwärmetauscher zur Kühlung der Chips auf Verpackungstemperätur angeordnet ist. Der Lufteintritt selbst wird mittels Doppelkonus ausgeführt. Der Chipskühler sorgt für eine weitere Verbesserung der Verteilung der geringen Luftmenge, die im Gegenstrom durch die Pelletsäule perlt. Aufgrund der geringen Luftmenge, die eine im Verhältnis zur Masse der Pellets geringe Enthalpie besitzt, wird im Silo 8 ein Temperaturgleichgewicht eingestellt, das den Temperprozess nicht behindert. Bereits wenige Dezimeter oberhalb des Chipskühlers steht die Temperatur der Chipssäule im Gleichgewicht mit dem vorgesehenen Temperaturprofil der Entgasung.

Vorteilhaft wird die Spül-/Förderluft von einem Konti-Lufttrockner-System erzeugt. Als energiesparende Variante kann auch die Abluft des Silos für die Spülung des Sammelbehälters und Vortrockners sowie für die Förderluft und für die Regeneration des Lufttrocknersystems verwendet werden.

Figur 2 zeigt in vergrößerter Darstellung im Schnitt die Ausbildung des Verweil-/Entgasungssilos 8. Das Verweil-/Entgasungssilo 8 ist dabei in Form eines senkrechten zylinderförmigen Gehäuses ausgebildet. Das Silo 8 ist dabei in zwei Zonen unterteilt, und zwar in eine Zone gleicher Temperatur 20 und in eine Abkühlzone 21. Der Wärmetauscher der Kühlzone ist dabei als ein Rohrbündel 15 mit totflächenfreier Bearbeitung an seiner Oberseite ausgebildet. Wesentlich beim Verweil-/Entgasungssilo 8 ist dabei, dass die freie Fläche der Wärmetauscherrohre zur Behälterfläche mit 1:4 bis 1:6 bemessen wird und das L/D-Verhältnis des Wärmetauschers mindestens 1,2:1 beträgt. Die Einführung der trockenen Luft unterhalb des Rohrbündels des Wärmetauschers wird dabei durch einen ringförmigen Spalt, der durch einen Doppelkonus erzeugt wird, durchgeführt. An der Oberseite des Behälters ist ein Heißgasaustritt 16 vorgesehen. Zur Überwachung des Temperaturprofils kann das Verweil-/Entgasungssilo 8 mindestens 3 Messstellen über die gesamte Zylinderhöhe aufweisen, die vorzugsweise zentral, nahe der Behältermittellinie angeordnet sein können (nicht abgebildet). Ein weiteres Kennzeichen des Verweil-/Entgasungssilos 8 ist es, dass der zylindrische Teil des Behälters mit einer aktiven Isolierung, z.B. einer elektrischen Beheizung, Halbrohrschlangen o.ä., ausgestattet ist.

## Patentansprüche

1. Verfahren zur direkten Herstellung von hydrolysearmem Polyester-Granulat aus einer hochviskosen Polyester-Schmelze mit einem Polymerisationsgrad (PG) von 132 bis 165, bei dem die Schmelze nach einem Heißabschlagsverfahren einer Vortrocknung und Trocknung/Entgasung unterzogen wird, wobei die Schneidephase im Heißabschlagsverfahren bei Wassertemperaturen von 70 bis 95 °C erfolgt und ein Flottenverhältnis das ist das Verhältnis Wasser zu Pellets/Granulat, von 8 bis 12:1 eingehalten wird und die Flotte vollständig bis zum Eintritt in die Vortrocknung erhalten bleibt und das Kreislaufwasser im Vortrockner innerhalb von < 10 Sekunden abgeschieden wird, **dadurch gekennzeichnet, dass** das Granulat vom Sammelbehälter (7) zur Trocknung in eine Trocknungs-/Entgasungsvorrichtung (8) mit einer Temperzone (20) und einer Kühlzone (21) mittels einer Heißtuftförderung verbracht wird, wobei ein kombiniertes Trocknen und Kühlen erfolgt und wobei das Trocknen über 6 bis 12 Stunden bei 150 bis 180 °C, bevorzugt bei 160 bis 175 °C, und das Kühlen über 0,5 bis 1,5 Stunden abnehmend auf 50 °C durchgeführt wird.

2. Verfahren nach Anspruch 1,
**dadurch gekennzeichnet, dass** 99 % des Kreislaufwassers im Vortrockner (5) abgeschieden werden, wobei als Vortrockner (5) bevorzugt eine Rührzentrifuge eingesetzt wird, deren Zentrifugenzarge von der Basis aus nach oben konisch oder abgestuft zylindrisch ausgebildet ist und dass das Kreislaufwasser im unteren Fünftels des Vortrockners (5) entfernt wird.

3. Verfahren nach mindestens einem der Ansprüche 1 oder 2,
**dadurch gekennzeichnet, dass** bei der Vortrocknung im Temperaturbereich von 120 °C bis 180 °C gearbeitet wird, wobei bevorzugt der Taupunkt bei der Vortrocknung im Vortrockner (5) auf 8 bis 12 °C mittels einer im Gegenstrom geführten Spülluftmenge aus einem nachgeschalteten Auffangvolumen geregelt wird.

4. Verfahren nach einem der vorhergehenden Ansprüche,
**dadurch gekennzeichnet, dass** eine Verweildauer im Wasser vom Heißabschlag bis zum Eintritt in die Vortrocknung von < 1 Sekunde eingehalten wird.

5. Verfahren nach mindestens einem der vorhergehenden Ansprüche,
**dadurch gekennzeichnet, dass** zwischen Vortrocknung und Trocknung/Entgasung eine Klassierung mit einem Klassiersieb durchgeführt wird, wobei die Verweildauer auf dem Klassiersieb insbesondere maximal 30 Sekunden beträgt.

6. Verfahren nach vorhergehendem Anspruch,
**dadurch gekennzeichnet, dass** das Granulat nach der Klassierung vor der Trocknung/Entgasung in einem Sammelbehälter (7) mit temperierter, trockener Luft, gespült wird, wobei im Sammelbehälter (7) insbesondere eine maximale Verweildauer von 8 Minuten eingehalten wird, wobei die temperierte/getrocknete Luftmenge unter Verwendung von Abluft aus dem Temper-/Kühlsilo (8) zur Feuchteregelung des Vortrockners (5) verwendet wird.

7. Verfahren nach mindestens einem der vorhergehenden Ansprüche,
**dadurch gekennzeichnet, dass** die Brüden aus der Vortrocknung in einem Mischkondensator niedergeschlagen werden, dessen Kühlmedium aus einem Teilstrom des Hauptwasserkreislaufes entnommen und dessen Mischkondensat zur Temperaturregelung des Hauptwasserkreislaufes verwendet wird, wobei insbesondere das Mischungsverhältnis Teilstrom zu Hauptstrom ein Verhältnis von 1:4 bis 1:6 aufweist.

8. Verfahren nach mindestens einem der beiden vorhergehenden Ansprüche,
**dadurch gekennzeichnet, dass** die Aufbereitung der trockenen Luft auf Taupunkte von -10 °C bis -40 °C erfolgt.

9. Verfahren nach mindestens einem der Ansprüche 6 bis 8,
**dadurch gekennzeichnet, dass** die im Temper-/ Kühlsilo (8) eingeleitete Luft mit einer maximalen Temperatur von 40 °C im Verhältnis von 1:5 bis 1: 10 eine quasi laminare Verteilung durch den Kühler erfährt.

10. Verfahren nach mindestens einem der vorhergehenden Ansprüche,
**dadurch gekennzeichnet, dass** PET (Polyethylenterephthalat) hergestellt wird.

11. Vorrichtung zur direkten Herstellung eines hydrolysearmen Polyester-Granulats aus einer hochviskosen Polyester-Schmelze mit einem Polymerisationsgrad (PG) von 132 bis 165, umfassend einen Heißabschlag, einen Vortrockner (5) sowie eine Trocknungs-/Entgasungsvorrichtung (8), wobei der Vortrockner (5) als Rührzentrifuge ausgebildet ist, wobei die Zentrifugenzarge von der Basis aus nach oben konisch bzw. gestuft zylindrisch aufgeweitet ist, **dadurch gekennzeichnet, dass** die Trocknungs-/ Entgasungsvorrichtung (8) in Form eines senkrecht stehenden zylindrischen Behälters mit einer Temperzone (20) und einer Kühlzone (21) ausgebildet ist.

12. Vorrichtung nach vorhergehendem Anspruch,
**dadurch gekennzeichnet, dass** die Rührzentrifuge einen tangentialen Einlauf für die Flotte aufweist.

13. Vorrichtung nach mindestens einem der beiden vorhergehenden Ansprüche,
**dadurch gekennzeichnet, dass** dem Vortrockner (5) eine Klassiereinrichtung (6) nachgeschaltet ist, wobei insbesondere zwischen Klassiereinrichtung (6) und Trocknungs-/Entgasungsvorrichtung (8) ein Sammelbehälter (7) mit einem Lufteintritt für Abluft aus der Trocknungs-/Entgasungsvorrichtung (8) im Gegenstrom zum Granulat angeordnet ist.

14. Vorrichtung nach einem der Ansprüche 11 bis 13, **dadurch gekennzeichnet, dass** die Kühlzone (10) einen Wärmetauscher aufweist, dessen Rohrbündel mit totalflächenfreier Bearbeitung an seiner Oberseite ausgestattet ist, wobei bevorzugt der Wärmetauscher im Gegenstrom zum Granulat durch konditionierte Luft spülbar ist.

## Claims

1. Method for the direct production of polyester granulate low in hydrolysis from a highly viscous polyester melt having a degree of polymerisation (PG) of 132 to 165, in which the melt is subjected after a hot-cutting method to predrying and drying/degassing, **characterised in that**
the cutting phase in the hot-cutting method is effected at water temperatures of 70 to 95°C and a liquid-to-solid ratio, which is the ratio of water to pellets/granulate, of 8 to 12 : 1 is maintained, the liquor being retained completely until entry into the predrying and the circulation water in the predrier being separated within < 10 seconds, **characterized in that** the granulate is brought from the collecting container (7) for drying into a drying/degassing device (8) with a zone of equal temperature (20) and a cooling zone (21) by means of hot air conveyance, according to which a combined drying and cooling is effected and wherein the drying is implemented over 6 to 12 hours at 160 to 175°C, and the cooling over 0.5 to 1.5 hours reducing to 50°C.

2. Method according to claim 1,
**characterised in that** 99% of the circulation water is separated in the predrier (5), wherein an agitating centrifuge is preferably used as predrier (5), the centrifuge frame of which is configured from the base upwards conically or stepped cylindrically and **in that** the circulation water is removed in the lower fifth of the predrier (5).

3. Method according to at least one of the claims 1 to 2,
**characterised in that** the operation takes place in the predrying in the temperature range of 120°C to 180°C, wherein preferably the dew point during the predrying in the predrier (5) is controlled to 8 to 12°C by means of a quantity of rinsing air from a subsequently connected collecting container.

4. Method according to one of the preceding claims,
**characterised in that** a dwell time in the water from the hot-cutting until entry into the predrying of < 1 second is maintained.

5. Method according to at least one of the preceding claims,
**characterised in that** classification with a classifying sieve is implemented between predrying and drying/degassing, wherein the dwell time on the classifying sieve is preferably at most 30 seconds.

6. Method according to the preceding claims,
**characterised in that** the granulate is rinsed after the classification before the drying/degassing in a collecting container (7) with tempered, dry air, wherein preferably a maximum dwell time of 8 minutes is maintained in the collecting container (7), the tempered/dried quantity of air using exhaust air from a tempering/cooling silo (8) being used for moisture control of the predrier.

7. Method according to at least one of the preceding claims,
**characterised in that** the vapours from the predrying are condensed in a mix-condenser, the cooling medium of which is removed from a partial flow of the main water circulation and the mix-condensate of which is used for temperature control of the main water circulation, wherein preferably the mixing ratio of partial flow to main flow has a ratio of 1 : 4 to 1 : 6.

8. Method according to at least one of the both preceding claims,
**characterised in that** the treatment of the dry air is effected at dew points of - 10°C to - 40°C.

9. Method according to at least one of the claims 6 to 8,
**characterised in that** the air introduced in the tempering/cooling silo (8) with a maximum temperature of 40°C, at the ratio of 1 : 5 to 1 : 10, has a quasi-laminar distribution through the cooler.

10. Method according to at least one of the preceding claims, **characterised in that** PET (polyethyleneterephthalate) is produced.

11. Device for direct production of a polyester granulate of low hydrolysis from a highly viscous polyester melt with a degree of polymerisation (PG) of 132 to 165, comprising a hot-cutting, a predrier (5), a collecting container (7) and also a drying/degassing device (8), wherein, the predrier (5) is configured as an agitating centrifuge, the centrifuge frame being widened from the base upwards conically or stepped cylindrically, **characterized in that** the drying/degassing device (8) is configured in the form of a vertical cylindrical container with a tempering zone (20) and a cooling one (21).

12. Device according to the preceding claim,
**characterised in that** the agitating centrifuge has a tangential inflow for the liquor.

13. Device according to at least one of the both preceding claims,
**characterised in that** a classifying device (6) is connected after the predrier (5), wherein preferably a collecting container (7) with an air inlet for exhaust air from the drying/degassing device (8) in counterflow to the granulate is disposed between classifying device (6) and drying/degassing device (8).

14. Device according to one of the claims 11 to 13,
**characterised in that** the cooling zone (10) has a heat exchanger, the tube bundle of which is configured with totally free surface processing on its upper side, wherein preferably the heat exchanger can be rinsed by conditioned air in counterflow to the granulate.

## Revendications

1. Procédé de préparation directe d'un granulé de polyester à faible dégradation par hydrolyse, à partir d'une masse fondue de polyester à haute viscosité, présentant un degré de polymérisation (DP) allant de 132 à 165, dans lequel la masse fondue, après un procédé de granulation à coupe chaude, est soumis à un préséchage et à un séchage/dégazage, la phase de coupe s'effectuant dans le procédé de granulation à coupe chaude, à des températures de l'eau allant de 70 à 95 °C, et un rapport de bain, c'est-à-dire le rapport de l'eau sur les pastilles/granulé est maintenu de 8 à 12/1, et le bain est conservé complètement jusqu'à l'entrée dans l'étape de préséchage, et l'eau de recyclage est séparée, dans le présécheur, en < 10 secondes, **caractérisé en ce que** le granulé est transféré, à l'aide d'un transporteur d'air chaud, du réservoir collecteur (7) au séchage dans un dispositif de séchage/dégazage (8) doté d'une zone de recuit (20) et d'une zone de refroidissement (21), un séchage et un refroidissement combinés s'effectuant, le séchage étant réalisé de 6 à 12 heures, de 150 à 180 °C, de préférence, de 160 à 175 °C, et le refroidissement étant réalisé de 0,5 à 1,5 heures, avec abaissement à 50 °C.

2. Procédé selon la revendication 1, **caractérisé en ce que** 99 % de l'eau de recyclage sont séparés dans le présécheur (5), une centrifugeuse avec agitateur étant utilisée en tant que présécheur (5), dont le corps de centrifugeuse, à partir de la base vers le haut, est façonné de manière conique ou cylindrique en étages, et **en ce que** l'eau de recyclage est éliminée dans le cinquième partie inférieure du présécheur (5).

3. Procédé selon au moins l'une quelconque des revendications 1 ou 2, **caractérisé en ce que**, lors du préséchage, on travaille dans une plage de températures allant de 120 °C à 180 °C, le point de rosée, lors du préséchage dans le présécheur (5), étant ajusté de préférence de 8 à 12 °C à l'aide d'une quantité d'air de rinçage, envoyée à contre-courant, provenant d'un volume de collecte en aval.

4. Procédé selon l'une quelconque des revendications précédentes, **caractérisé en ce qu'**un temps de séjour dans l'eau du granulateur à coupe chaude jusqu'à l'entrée dans l'étape de préséchage, est ajusté à < 1 seconde.

5. Procédé selon au moins l'une quelconque des revendications précédentes, **caractérisé en ce que**, entre le préséchage et le séchage/dégazage, une classification est réalisée à l'aide d'un tamis de classification, le temps de séjour sur le tamis de classification étant, en particulier, au maximum de 30 secondes.

6. Procédé selon la revendication précédente, **caractérisé en ce que** le granulé, après la classification et avant le séchage/dégazage, est rincé dans un réservoir collecteur (7) avec un air sec et tempéré, un temps de séjour maximum de 8 minutes étant maintenu, en particulier, dans le réservoir collecteur (7), la quantité d'air tempérée/séchée étant utilisée, par utilisation de l'air sortant du silo de recuit/refroidissement, pour réguler l'humidité du présécheur (5).

7. Procédé selon au moins l'une quelconque des revendications précédentes, **caractérisé en ce que** les vapeurs provenant du préséchage sont mises à précipiter dans un condenseur à mélange, dont le fluide de refroidissement est prélevé d'un courant partiel du circuit d'eau principal, et dont le condensat à mélange est utilisé pour la régulation de la température du circuit d'eau principal, le rapport de mélange du courant partiel sur le courant principal présentant, en particulier, un rapport de 1/4 à 1/6.

8. Procédé selon au moins l'une quelconque des deux revendications précédentes, **caractérisé en ce que** le traitement de l'air sec s'effectue à des points de rosée allant de -10 °C à -40 °C.

9. Procédé selon au moins l'une quelconque des revendications 6 à 8, **caractérisé en ce que** l'air introduit dans le silo de recuit/refroidissement (8), présentant une température maximale de 40 °C selon un rapport de 1/5 à 1/10, subit sous l'effet du refroidisseur une distribution quasi- laminaire.

10. Procédé selon au moins l'une quelconque des revendications précédentes, **caractérisé en ce que** le PET (poly(téréphtalate d'éthylène)) est préparé.

11. Dispositif de préparation directe d'un granulé de polyester à faible dégradation par hydrolyse, à partir d'une masse fondue de polyester à haute viscosité, présentant un degré de polymérisation (DP) allant de 132 à 165, comprenant un granulateur à coupe chaude, un présécheur (5), un réservoir collecteur (7), ainsi qu'un dispositif de séchage/dégazage (8), le présécheur (5) étant façonné comme une centrifugeuse avec agitateur, le corps de la centrifugeuse s'élargissant, à partir de la base vers la haut, d'une manière conique ou cylindrique en étages, **caractérisé en ce que** le dispositif de séchage/dégazage (8) est façonné sous forme d'un récipient cylindrique vertical doté d'une zone de recuit (20) et d'une zone de refroidissement (21).

12. Dispositif selon la revendication précédente, **caractérisé en ce que** la centrifugeuse avec agitateur présente une entrée tangentielle pour le bain.

13. Dispositif selon au moins l'une quelconque des deux revendications précédentes, **caractérisé en ce qu'**un dispositif de classification (6) est disposé en aval du présécheur (5), en particulier un réservoir collecteur (7), comportant une entrée d'air pour l'air sortant du dispositif de séchage/dégazage (8), est agencé à contre-courant par rapport au granulé entre le dispositif de classification (6) et le dispositif de séchage/dégazage (8).

14. Dispositif selon l'une quelconque des revendications 11 à 13, **caractérisé en ce que** la zone de refroidissement (10) présente un échangeur de chaleur dont le faisceau tubulaire est configuré avec un usinage sans surface totale sur sa face supérieure, l'échangeur de chaleur pouvant, de préférence, être rincé par de l'air conditionné à contre-courant par rapport au granulé.
